# EUROPÄISCHE PATENTSCHRIFT

(11) **EP 4 442 935 B1**
(45) Veröffentlichungstag und Bekanntmachung des Hinweises auf die Patenterteilung: **01.07.2026**
(21) Anmeldenummer: 23166897.1
(22) Anmeldetag: 06.04.2023
(51) Int. Cl.: E04H 6/18, B65G 1/04

(54) **REGALBEDIENGERÄT UND HOCHREGALLAGER, INSBESONDERE ZUR LAGERUNG VON SATTELAUFLIEGERN**
STORAGE AND RETRIEVAL DEVICE AND HIGH-BAY WAREHOUSE, IN PARTICULAR FOR STORING SEMITRAILERS
TRANSSTOCKEUR ET ENTREPÔT À RAYONNAGES HAUTS, EN PARTICULIER POUR LE STOCKAGE DE SEMI-REMORQUES

(43) Veröffentlichungstag der Anmeldung: 09.10.2024
(73) Patentinhaber: TruckTower GmbH, 76646 Bruchsal (DE)
(72) Erfinder: HACKBARTH, Felix, 76646 Bruchsal (DE)
(74) Vertreter: Keil & Schaafhausen Patentanwälte PartGmbB

(56) Entgegenhaltungen:
- EP-B1- 3 739 150
- DE-A1- 10 016 121
- GB-A- 2 080 265
- JP-U- S5 913 544

## Beschreibung

Die Erfindung betrifft ein Regalbediengerät zur Bedienung eines Hochregallagers, insbesondere zur Be- und Entladung eines Hochregallagers mit Sattelaufliegern, d. h., zur Einlagerung von Sattelaufliegern in ein sogenanntes Sattelauflieger-Hochregallager. Ferner betrifft die Erfindung ein Hochregallager sowie ein Verfahren zur Be- und Entladung mit Sattelaufliegern von der Straße und von der Schiene.

Hochregallager zur Einlagerung verschiedener Gegenstände sind allgemein bekannt. Häufig werden (vollautomatisierte) Regalbediengeräte zur Be- und Entladung der Lagerplätze von Hochregallagern verwendet, wobei beispielsweise ein Verwaltungssystem die Be- und Entladung effizient steuert. Der Warentransport außerhalb der Lagersysteme erfolgt jedoch weitaus überwiegend per LKW, insbesondere per Sattelzug mit einer Sattelzugmaschine und einem Sattelauflieger, wobei die Fahrer gesetzlich zur Einhaltung ausreichender Ruhezeiten verpflichtet sind. Die Fahrer suchen daher regelmäßig Park- und Rastplätze entlang ihrer Fahrtrouten auf, um den gesetzlichen Erfordernissen Rechnung zu tragen. Aufgrund des stetig steigenden Güterverkehrs sind die Park- und Rastplätze, insbesondere zu Stoßzeiten, oftmals überfüllt. Der Ausbau der Rastplätze stellt die Betreiber vor große Herausforderung und ist aufgrund beschränkter Grundstücksflächen nicht immer möglich. Zudem führt die Bereitstellung großer Park- und Rastplätze zu einer verstärkten Flächenversiegelung, was insbesondere negative Folgen für das Ökosystem hat. Ebenso besteht der politische Wille, mehr Warentransport auf die Schiene zu verlagern, eine flexible Möglichkeit ist es, Trailer auf die Bahn zu verladen. Mit dieser Art des Regalbediengerätes ist es möglich, auch herkömmliche Trailer direkt auf den Waggons abzusetzen. Für solche Verladepunkte werden viele Trailer-Parkplätze für die zu verladenden und zu entladenden Trailer gerade dort benötigt, wo an meist hochverdichteten wichtigen Infrastrukturknoten Straße und Schiene aufeinander treffen.

Aus diesem Grund besteht der Bedarf nach neuartigen Parkiervorrichtungen, die bei vergleichsweise geringer Flächenausnutzung eine große Anzahl an Park- und Rastplätzen bietet. Beispielhafte Parkiervorrichtungen sind aus der EP 3 739 150 A1 , der DE 100 16 121 A1 und aus der JP S59 13544 U bekannt. Bekannte Parkiervorrichtungen haben teilweise den Nachteil vergleichsweise hoher Zugriffszeiten. Zudem sind bekannte Parkiervorrichtungen in der Regel massiv ausgestaltet und erfordern hierdurch einen hohen Materialeinsatz sowie eine große Anzahl Einzelteile, was sich auch auf die Herstellungskosten einer solchen Parkiervorrichtung auswirkt.

Ausgehend hiervon ist es eine Aufgabe der vorliegenden Erfindung ein Regalbediengerät, ein Hochregallager sowie ein Verfahren zur Bedienung eines derartigen Hochregallagers bereitzustellen, wodurch Zugriffszeiten reduziert werden können und eine effiziente Einlagerung, insbesondere mit Sattelaufliegern, ermöglicht wird.

Diese Aufgabe wird im Wesentlichen durch ein Regalbediengerät (RBG) gemäß Anspruch 1 gelöst, welches zur Bedienung eines Hochregallagers, insbesondere zur Be- und Entladung eines Hochregallagers mit Sattelaufliegern, eingerichtet ist.

Das RBG weist eine mit einer Rahmenstruktur des RBG gekoppelte Handhabungseinheit auf. Die Rahmenstruktur kann beispielsweise aus verschieden angeordneten Streben bestehen und stellt einen im Wesentlichen steifen Grundkörper des RBG dar. Die Handhabungseinheit ist in wenigstens eine Raumrichtung horizontal verfahrbar ausgestaltet. Beispielsweise kann das RBG hierzu ein Fahrwerk aufweisen oder auf einem Schienensystem geführt werden. Hierdurch wird ermöglicht, dass das RBG beispielsweise entlang einer Zeile eines Hochregallagers verfahrbar ist. Eine Zeile eines Hochregallagers beschreibt dabei die horizontal nebeneinander angeordneten Lagerplätze, wobei die vertikal übereinander angeordneten Lagerplätze in einer Spalte angeordnet sind. Ferner ist die Handhabungseinheit entlang der Rahmenstruktur vertikal verfahrbar ausgestaltet. Die Rahmenstruktur kann hierfür beispielsweise eine Art Schienenführung aufweisen, sodass die Handhabungseinheit in vertikaler Richtung, d. h., entlang der Lagerplätze einer Spalte eines Hochregallagers, verfahrbar ist. Ferner ist die Handhabungseinheit relativ zu der Rahmenstruktur in Längsrichtung der Handhabungseinheit von wenigstens einer ersten Position in wenigstens eine zweite Position verfahrbar ausgestaltet. Wenn das RBG mit einem Hochregallager verwendet wird, verläuft die Längsrichtung der Handhabungseinheit vorzugsweise senkrecht zur Zeilen- und Spaltenrichtung des Hochregallagers.

Ein Verfahren der Position der Handhabungseinheit kann beispielsweise durch entsprechende Antriebe erfolgen, wobei hierdurch insbesondere ein Ein- und Ausfahren der Handhabungseinheit in Lagerplätze eines Hochregallagers ermöglicht wird, d. h., ein Verfahren relativ zu der Rahmenstruktur des RBG. Die erste Position stellt dabei eine nicht ausgefahrene Ausgangsposition, in der die Handhabungseinheit beispielsweise beabstandet von einem Hochregallager angeordnet ist, dar, wobei die zweite Position eine Position der Handhabungseinheit darstellt, bei der die Handhabungseinheit ausgefahren ist, d. h. beispielsweise in einen Lagerplatz eines Hochregallagers eingefahren ist.

Ferner weist die Handhabungseinheit des erfindungsgemäßen RBGs eine Hubeinheit sowie einen Gabelträger auf. Der Gabelträger erstreckt sich von der Hubeinheit weg in eine Längsrichtung der Handhabungseinheit und weist wenigstens einen Zinken auf, die bei beispielsweise zwei Zinken parallel zueinander in Querrichtung zueinander beabstandet angeordnet sein können. Wenn nur ein Zinken vorgesehen ist, kann dieser auf der der Hubeinheit abgewandten Seite etwa T-förmig gestaltet sein. Während der Verwendung der Handhabungseinheit dienen die Zinken als Auflagefläche für die mit der Handhabungseinheit beförderten Gegenstände und können beispielsweise balkenartig ausgestaltet sein. Sofern es sich bei den Gegenständen um Sattelauflieger handelt, liegen beispielsweise die Räder zumindest bereichsweise auf den Zinken auf, wobei die Zinken längliche Tragelemente bilden. Das Profil der Zinken kann dabei bereichsweise verschieden sein und wird insbesondere in Abhängigkeit der zu befördernden Gegenstände ausgestaltet. Die Hubeinheit, die an einem Ende der Zinken angeordnet ist, ist dazu eingerichtet, eine Hubbewegung in vertikaler Richtung relativ zu dem Gabelträger auszuführen. Sofern ein Gegenstand auf der Hubeinheit aufliegt, kann dieser somit im Bereich der Hubeinheit relativ zu dem Gabelträger in vertikaler Richtung bewegt werden.

Für den Fall, dass es sich bei dem Gegenstand um einen Sattelauflieger handelt, weist dieser an einem Ende Räder und an einem anderen Ende einen Bereich zur Kupplung mit einer Sattelzugmaschine auf. In der Regel wird hierbei das sattelaufliegerseitige Kupplungselement durch einen Königszapfen gebildet, sodass der Sattelauflieger von der Hubeinheit des RBG im Bereich des Königszapfens angehoben werden kann. Dies ermöglicht, dass ein Sattelauflieger, der abgesattelt auf Rädern und Stützen steht, bereichsweise angehoben wird, wodurch sich die Stützen von ihrer Abstellfläche abheben und der Sattelauflieger auf der Hubeinheit und den Rädern aufliegt. Um den Sattelauflieger von einer Abstellfläche auf die Handhabungseinheit zu bewegen, kann die Handhabungseinheit beispielsweise unter den Sattelauflieger fahren. Die Hubeinheit hebt dann den Sattelauflieger im Bereich des Königszapfen an, sodass bei gelöster Bremse oder einem vergleichsweise reibungsarmen Untergrund der Sattelauflieger dann von der Abstellfläche auf die Handhabungseinheit bewegt, insbesondere gezogen, werden, indem das RBG und/oder die Handhabungseinheit in Längsrichtung der Handhabungseinheit verfahren wird. Hierdurch können abgesattelte Sattelauflieger von der Handhabungseinheit aufgenommen, transportiert und abgestellt werden. Die Handhabungseinheit als Teil des RBG ermöglicht somit die Aufnahme eines Sattelaufliegers zum Be- und Entladen eines Lagerplatzes eines Hochregallagers.

Nach einer Ausführungsform ist das Regalbediengerät in zwei Raumrichtungen horizontal verfahrbar ausgestaltet ist. Hierdurch ist es möglich, dass das RBG beispielsweise mit Hilfe eines Fahrwerks entlang der Lagerplätze eines Hochregallagers horizontal bewegt werden kann und somit verschiedene Lagerplätze einer Zeile des Hochregallagers anfahren kann. Ferner ermöglicht die verfahrbare Ausgestaltung in eine weitere Raumrichtung ein Verfahren senkrecht zur Zeilen- und Spaltenrichtung eines Hochregallagers, wodurch das RBG zu einer Zeile des Hochregallagers beabstandet werden kann. Sofern ein Hochregallager mit mehreren RBGs bedient wird, können die RBGs somit aneinander vorbeifahren und jeden Lagerplatz einer Zeile ansteuern ohne sich gegenseitig zu blockieren.

Nach einer weiteren Ausführungsform ist die Handhabungseinheit in der ersten Position relativ zu der Rahmenstruktur mittig angeordnet, wobei die Rahmenstruktur insbesondere vier sich in vertikaler Richtung erstreckende Streben aufweist. Eine mittige Anordnung hat dabei insbesondere zum Ziel, dass die auf den Gabelträger in der zweiten Position wirkenden Hebelkräfte, beispielsweise beim Aufladen eines Sattelaufliegers, reduziert werden können, indem die Handhabungseinheit von der ausgefahrenen zweiten Position weiter in die Rahmenstruktur der Handhabungseinheit eingefahren ist. Ferner können die Streben zur Führung der Handhabungseinheit bei einem Verfahren in vertikaler Richtung dienen.

Ferner kann die Hubeinheit eine Sattelkupplung aufweisen. Die Sattelkupplung ermöglicht dabei eine Kupplung zwischen einem Sattelauflieger und der Hubeinheit, sodass der Sattelauflieger im Bereich der Hubeinheit nach einem Einkuppeln nicht mehr frei beweglich ist.

Zudem kann die Sattelkupplung dazu eingerichtet sein, eine formschlüssige oder kraftschlüssige Verbindung mit einem Königszapfen eines Sattelaufliegers einzugehen, vergleichbar mit einer Kupplung zwischen einem Sattelauflieger und einer Sattelzugmaschine.

Zusätzlich weist die Handhabungseinheit in einer alternativen Ausführungsform eine Länge, d.h., in Längsrichtung, von mehr als 10 m und weniger als 16.5 m, vorzugsweise von weniger als 14 m, und/oder eine Breite, d. h., in Querrichtung, von mehr als 2 m und weniger als 3 m, vorzugweise von weniger als 2.6 m, auf.

Ferner können die Zinken zumindest bereichsweise ein Doppel-T-Profil aufweisen. Wenngleich alternative Profile denkbar sind, ermöglicht ein Doppel-T-Profil eine einfache Möglichkeit Leitungen und Kabel teilweise geschützt und dennoch zugänglich entlang der Zinken zu verlegen. Hierdurch können insbesondere aufwändige Maßnahmen, beispielsweise ein Zerlegen der Zinken, für die Wartung vermieden werden.

Nach einer alternativen Ausführungsform weisen die Zinken jeweils wenigstens einen Keil auf, der insbesondere dazu eingerichtet ist unter Räder eines Sattelaufliegers geschoben zu werden. Beispielsweise kann der Keil hierfür entlang der Zinken verschiebbar angeordnet sein, wobei die Beabstandung der Zinken vorzugsweise geringer ist, als die Spurbreite des Sattelaufliegers, und wobei die Keile entsprechend der Spurbreite voneinander beabstandet sind, sodass die Keile entlang der Zinken unter die Räder geschoben werden können. Alternativ kann die Handhabungseinheit eine zusätzliche Vorrichtung, beispielsweise Greifer oder in Querrichtung der Zinken ausfahrbare Bolzen oder einer Tragfläche, beispielsweise eine Palette, zum Anheben von Rädern eines Sattelaufliegers aufweisen. Die Greifer und die Bolzen können dabei die Räder direkt erfassen oder gegen die Innenseiten der Räder gepresst werden. Alternativ kann der Sattelauflieger mit den Rädern auf der Tragfläche, beispielsweise der Palette, abgestellt werden, sodass die Zinken der Handhabungseinheit die Tragfläche ergreifen, beispielsweise indem sie in die Tragfläche einfahren, und diese anheben, beispielsweise indem die Zinken die Tragfläche durch eine Bewegung der Handhabungseinheit in vertikaler Richtung anheben. Derartige zusätzliche Vorrichtungen sind insbesondere dann hilfreich, wenn der Sattelauflieger von einem Untergrund auf die Handhabungseinheit gehoben werden soll und nicht, wie oben beispielsweise in Bezug auf einen reibungsarmen Untergrund beschrieben, auf die Handhabungseinheit gezogen werden soll.

Zusätzlich wird die Aufgabe der vorliegenden Erfindung auch durch ein Hochregallager gemäß Anspruch 10 gelöst. Das Hochregallager umfasst wenigstens ein RBG gemäß der vorangegangenen Beschreibung. Ferner weist das Hochregallager Lagerplätze auf, die zur Einlagerung eines Sattelaufliegers eingerichtet sind. Vorzugsweise weist das Hochregallager mehrere RBGs auf, sodass beispielsweise gleichzeitig ein Sattelauflieger in das Hochregallader von einem RBG eingelagert und von einem anderen RBG entnommen werden kann. Sofern mehrere RBGs für ein Hochregallager zum Einsatz kommen, können diese entsprechend den obigen Ausführungsformen verschiedenartig ausgebildet sein. Beispielsweise können die RBGs verschiedene Vorrichtungen zum Anheben der Räder aufweisen. Ebenso können die RBGs in unterschiedliche viele Raumrichtungen verfahrbar ausgestaltet sein. Damit die RBGs beim Verfahren nicht kollidieren, ist ein Verfahren wenigstens eines RBGs senkrecht zur Zeilen- und Spaltenrichtung, wie oben beschrieben, vorteilhaft. Ferner weisen die Lagerplätze unter anderem entsprechende Abmaße auf, sodass die Einlagerung von Sattelaufliegern ermöglicht wird. Jeder Lagerplatz ist hierbei zur Lagerung eines Sattelaufliegers vorgesehen und muss beispielsweise entsprechende Traglasten von mehreren Tonnen tragen können.

Nach einer Ausführungsform weist jeder Lagerplatz wenigstens vier Stellflächen auf, wobei die Stellflächen zwei Größen aufweisen, und wobei jeweils zwei Stellflächen gleichgroß sind. Vorzugsweise sind die jeweils kleineren Stellflächen zum wenigstens bereichsweisen Absetzen von Stützen eines Sattelaufliegers eingerichtet und die jeweils größeren Stellflächen zum wenigstens bereichsweisen Absetzen von Rädern des Sattelaufliegers. Folglich weist ein entsprechender Lagerplatz keine Vollfläche auf, wodurch erhebliche Material, Gewichts und Kosteneinsparungen möglich sind.

Ferner beträgt der Abstand von Stellflächen übereinander angeordneter Lagerplätze vorzugsweise wenigstens 4 m. Dabei sind sowohl die Abmessungen der Lagerplätze untereinander als auch die Abmessungen des RBG vorzugsweise zumindest so ausgestaltet, dass das Hochregallager für die in seinem Einsatzgebiet, beispielsweise in Europa, verwendeten Sattelauflieger geeignet sind.

Des Weiteren wird die Aufgabe auch durch ein Verfahren gemäß Anspruch 14 gelöst, wobei das Verfahren die folgenden Schritte aufweist:
- Einfahren eines Sattelzugs mit einer Sattelzugmaschine und einem Sattelauflieger mit einem Königszapfen in das Hochregallager;
- Absatteln des Sattelaufliegers;
- Ausfahren der Sattelzugmaschine aus dem Hochregallager;
- Alternativ zu den vorgenannten Punkten: Einfahren eines Eisenbahnwaggons beladen mit einem Sattelauflieger mit einem Königszapfen in das Hochregallager;
- Aufsatteln des Sattelaufliegers auf eine Handhabungseinheit des Regalbediengeräts;
- Ermitteln eines Lagerplatzes zur Einlagerung des Sattelaufliegers;
- Anheben des Königszapfens des Sattelaufliegers mit einer Hubeinheit;
- Bewegen der Handhabungseinheit relativ zum Hochregellager, insbesondere auch durch Relativbewegung des Regalbediengeräts zum Hochregallager;
- Einfahren der Handhabungseinheit in einen Lagerplatz; und
- Absetzen des Sattelaufliegers auf dem Lagerplatz.

Vorzugsweise fährt der Sattelzug zunächst in eine Einfahrt des Hochregallagers und sattelt hier die Sattelzugmaschine von dem Sattelauflieger ab. Das Einfahren in das Hochregallager kann auch ein Einfahren in wenigstens ein RBG bedeuten, das Teil des Hochregallagers ist. Sobald der Sattelauflieger abgesattelt ist, steht der Sattelauflieger auf seinen Rädern und Stützen, wobei die Sattelzugmaschine den Sattelauflieger zurücklässt und beispielsweise auf einen Parkplatz fährt. Anschließend wird der Sattelauflieger auf die Handhabungseinheit des RBG aufgesattelt, wozu die Handhabungseinheit ggf. unter den Sattelauflieger gefahren wird, sofern der Sattelauflieger nicht bereits direkt in dem RBG abgestellt wurde. Der Sattelauflieger kann dabei mit einer Sattelkupplung der Hubeinheit der Handhabungseinheit über den Königszapfen gekuppelt werden. Die Handhabungseinheit bzw. die Hubeinheit hebt anschließend den Königszapfen des Sattelaufliegers. Gegebenenfalls werden zudem die Räder mit einer Vorrichtung entsprechend der vorangegangenen Beschreibung angehoben. Anschließen bewegt die Handhabungseinheit den Sattelauflieger zu einem entsprechenden Lagerplatz des Hochregallagers. Anschließend fährt die Handhabungseinheit in den Lagerplatz ein und setzt den Sattelauflieger auf dem Lagerplatz, beispielsweise auf den entsprechenden Stellflächen ab.

In einer Ausführungsform können zur Ermittlung eines Lagerplatzes zur Einlagerung des Sattelaufliegers verschiedene Parameter einzeln oder in beliebiger Kombination, beispielsweise mit Hilfe eines Verwaltungssystems, berücksichtigt werden. Die Parameter umfassen insbesondere das Gewicht des Sattelaufliegers, die Größe des Sattelaufliegers, die Anzahl zu erwartender Sattelzüge, die geplanten Ankunftszeitpunkte der Sattelzüge, die voraussichtlichen Abfahrtszeitpunkte eingelagerter Sattelauflieger oder die aktuelle und die erwartete Auslastung der Lagerplätze. Hierdurch kann eine möglichst energieeffiziente Nutzung des Hochregallagers gewährleistet sowie schnelle Zugriffszeiten ermöglicht werden.

Nachfolgend wird die Erfindung anhand von Ausführungsbeispielen und unter Bezugnahme auf die Zeichnung näher erläutert. Dabei bilden alle beschriebenen und/oder bildlich dargestellten Merkmale für sich den Gegenstand der Erfindung unabhängig von ihrer Zusammenfassung in den Ansprüchen oder deren Rückbezügen.

Es zeigen schematisch:
- Fig. 1A: eine perspektivische Ansicht eines erfindungsgemäßen Regalbediengeräts,
- Fig. 1B: eine perspektivische Ansicht eines erfindungsgemäßen Regalbediengeräts gemäß Fig. 1A mit einem Sattelauflieger,
- Figur 2: eine perspektivische Ansicht eines Hochregallagers ohne Regalbediengerät,
- Fig. 3A: eine Seitenansicht einer mit Keilen versehenen Handhabungseinheit eines erfindungsgemäßen Regalbediengeräts in einer ersten Position,
- Fig. 3B: eine Seitenansicht der Handhabungseinheit gemäß Fig. 3A in einer zweiten Position,
- Fig. 4: eine perspektivische Ansicht eines in einem Lagerplatz eines Hochregallagers eingelagerten Sattelaufliegers, wobei die Räder des Sattelaufliegers auf einer Tragfläche stehen,
- Fig. 5: eine perspektivische Ansicht eines in einem Lagerplatz eines Hochregallagers eingelagerten Sattelaufliegers, wobei die Räder und Stützen auf entsprechenden kleinen und großen Stellflächen stehen;
- Fig. 6: in Seitenansicht eine alternative Ausführungsform der Handhabungseinheit mit Bolzen, um die Räder des Sattelaufliegers anzuheben;
- Fig. 7: in Seitenansicht ein Detail der Handhabungseinheit gemäß Fig. 3A; und
- Fig. 8: in Seitenansicht ein Detail der Handhabungseinheit gemäß Fig. 4.

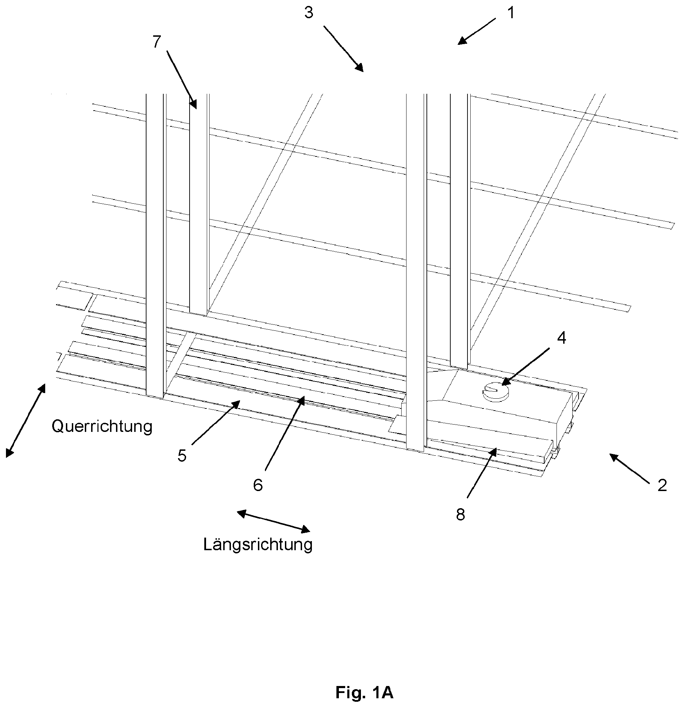

Figur 1A zeigt ein erfindungsgemäßes Regalbediengerät (RBG) 1 mit einer Handhabungseinheit 2 und einer Rahmenstruktur 3. Die Handhabungseinheit 2 weist eine Hubeinheit 4 auf, von der sich ein Gabelträger 5 in Längsrichtung der Handhabungseinheit 2 erstreckt. Die Hubeinheit weist auf ihrer oberen relativ zu der Handhabungseinheit bewegbaren Seite eine nicht näher dargestellte Sattelkupplung zur Aufnahme eines Königszapfens auf. Die Sattelkupplung kann dabei seitlich verschwenkbar oder verschiebbar ausgeführt sein. Ferner ist die Rahmenstruktur 3 in wenigstens eine Raumrichtung horizontal verfahrbar ausgestaltet, d. h., beispielsweise in Querrichtung. Ferner ist die Handhabungseinheit 2 in vertikaler Richtung, d. h., senkrecht zur Quer- und Längsrichtung, entlang der Rahmenstruktur 3 verfahrbar ausgestaltet. Zudem ist die Handhabungseinheit 2 relativ zu der Rahmenstruktur 3 in Längsrichtung der Handhabungseinheit 2 von einer ersten Position in eine zweite Position verfahrbar ausgestaltet. Der Gabelträger 5 erstreckt sich von der Hubeinheit 4 in Längsrichtung der Handhabungseinheit 2 und weist wenigstens zwei in Querrichtung zueinander beabstandete Zinken 6 auf.

Die in Figur 1A schemenhaft dargestellte Rahmenstruktur 3 hat vier Streben 7, die sich in vertikaler Richtung erstrecken. Die Handhabungseinheit 2 ist entlang dieser Rahmenstruktur 3 in vertikaler Richtung verfahrbar, sodass Lagerplätze in verschiedenen Höhen des Hochregallagers, d. h., in Spaltenrichtung, angesteuert werden können. Gleichzeitig dient die Verfahrbarkeit in eine Raumrichtung horizontal, beispielsweise in Querrichtung, dem Anfahren von verschiedenen Lagerplätzen einer Zeile eines Hochregallagers.

Die in Figur 1A dargestellte Ausführungsform eines RBG 1 weist zudem Keile 8 auf, die beispielsweise entlang der Zinken 6 in Längsrichtung verfahren werden können und so beispielsweise unter die Räder eines Sattelaufliegers geschoben werden können, um diese anzuheben. Zudem ist die Hubeinheit 4 dazu eingerichtet, eine Hubbewegung in die vertikale Richtung relativ zu dem Gabelträger 5 auszuführen.

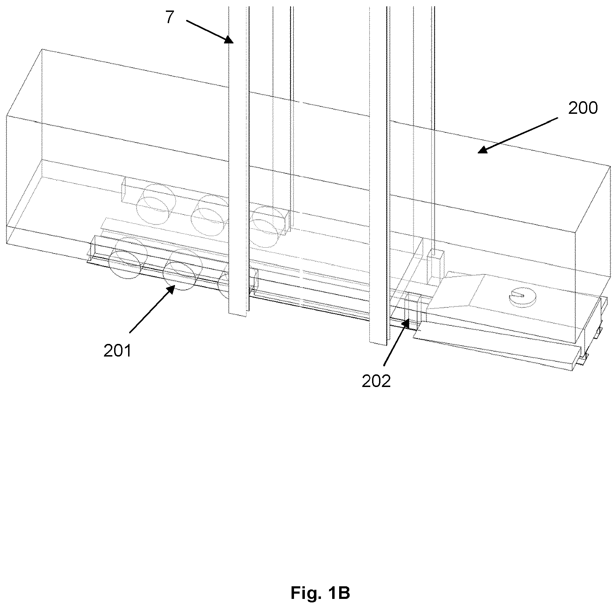

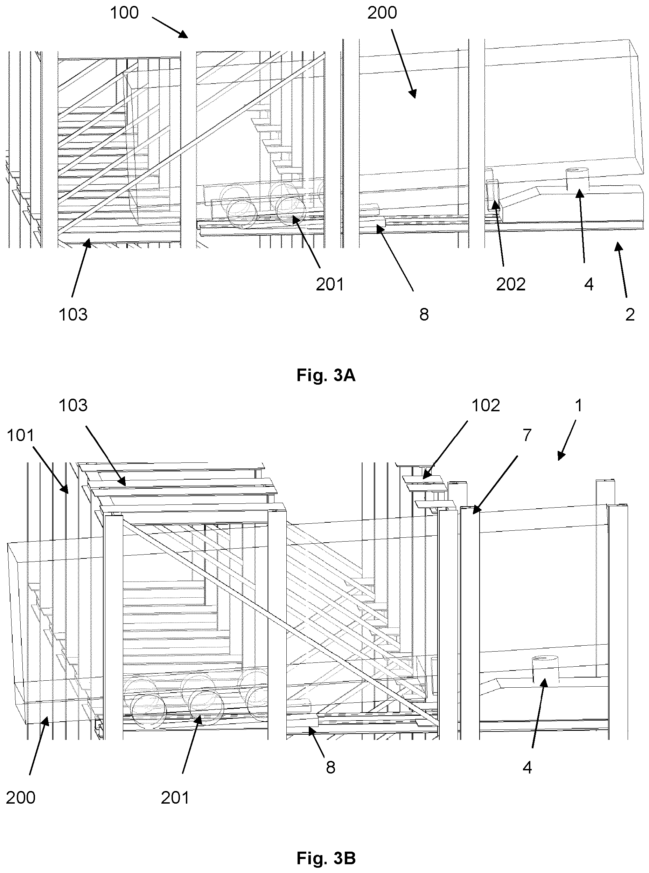

In Figur 1B ist das Regalbediengerät 1 gemäß Figur 1A mit einem Sattelauflieger 200 dargestellt, wobei der Sattelauflieger 200 mit seinen Rädern 201 auf den Zinken 6 der Handhabungseinheit 2 aufliegt und die Keile 8 noch nicht unter die Räder 201 geschoben wurden. Zudem liegt der vordere Teil des Sattelaufliegers 200 auf der Hubeinheit 4 auf, die in dem in Figur 1B dargestellten Zustand, im Gegensatz zu den in den Figuren 3A und 3B dargestellten Zuständen, den Sattelauflieger 200 nicht angehoben hat.

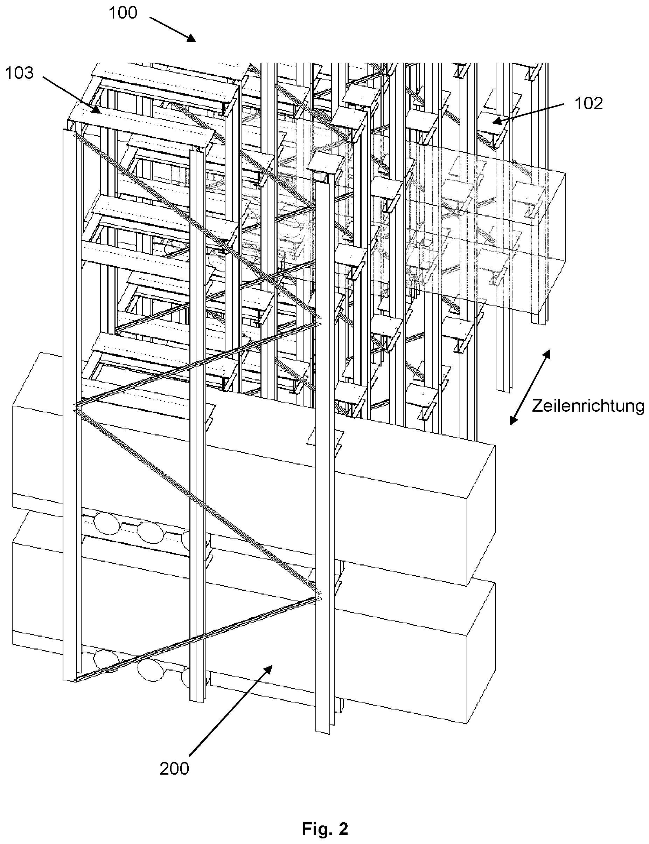

Figur 2 zeigt ein Hochregallager 100 mit einer Vielzahl an Lagerplätzen 101, wobei die Lagerplätze 101 jeweils insgesamt vier Stellflächen 102 und 103 mit verschiedenen Größen aufweisen. Die Lagerplätze 101 sind dabei horizontal in Zeilenrichtung, d. h., nebeneinander, und vertikal in Spaltenrichtung, d. h., übereinander, angeordnet. Die kleineren Stellflächen 102 dienen dabei zur Auflage für die Stützen 202 eines Sattelaufliegers 200 und die größeren Stellflächen 103 zur Auflage für die Räder 201 eines Sattelaufliegers 200.

In dem in Figur 2 dargestellten Zustand befinden sich zwei Sattelauflieger 200 in dem Hochregallager 100. Das zuvor in Figur 1A dargestellte RBG 1 und in Figur 2 nicht gezeigte RBG 1 ist für die Bedienung eines derartigen Hochregallagers 100 geeignet.

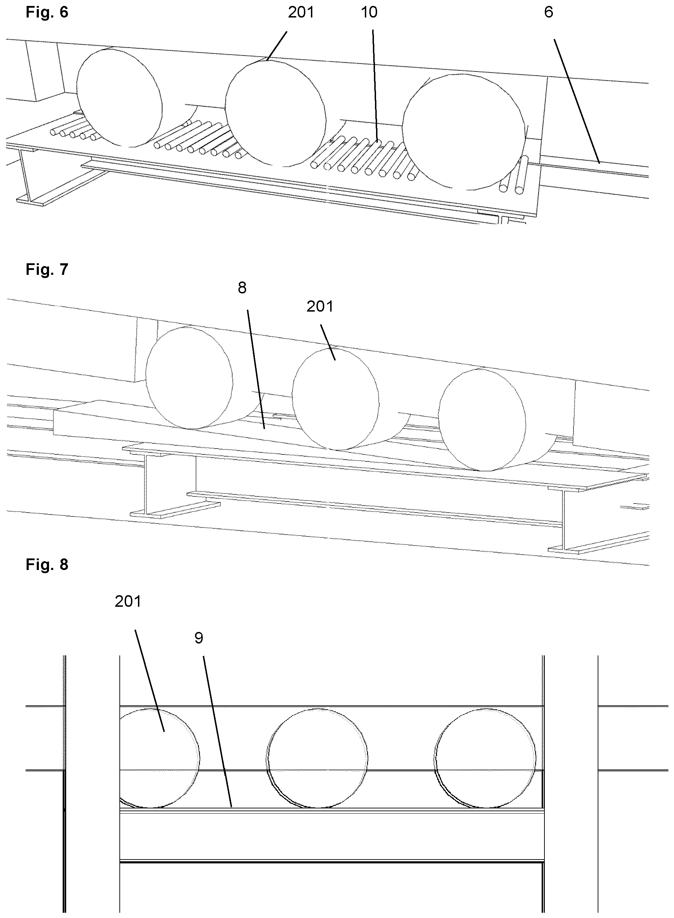

In den Figuren 3A und 3B ist eine Handhabungseinheit 2 mit einem durch die Hubeinheit 4 angehobenen Sattelauflieger 200 dargestellt. Entsprechend sind die Stützen 202 des Sattelaufliegers 200 von den Zinken 6 beabstandet. Zudem sind die in Figur 7 vergrößert dargestellten Keile 8 zumindest teilweise unter die Räder 201 des Sattelaufliegers 200 geschoben und dadurch ebenfalls angehoben. Zudem befindet sich die Handhabungseinheit 2 in dem in Figur 3A dargestellten Zustand in einer ersten Position, in der vorliegend die Handhabungseinheit 2 in Bezug auf die Rahmenstruktur 3 mittig angeordnet ist. In dem in Figur 3B gezeigten Zustand ist die Handhabungseinheit 2 dann in eine zweite Position überführt dargestellt, sodass die Gabelträger 5 weiter in den Lagerplatz 101 eingefahren sind, um hier den Sattelauflieger 200 ablegen zu können.

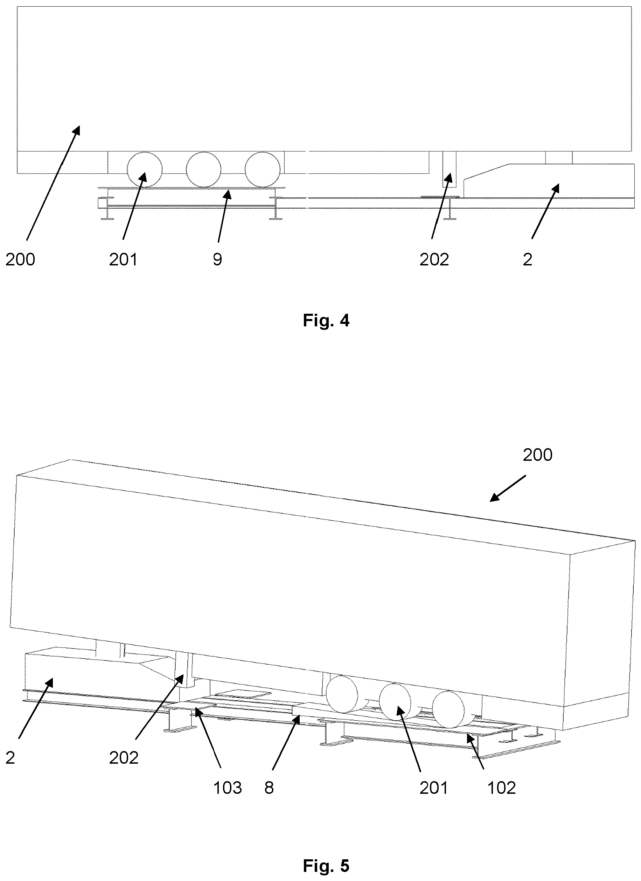

Figur 4 zeigt eine alternative Möglichkeit zum Anheben der Räder 201 eines Sattelaufliegers 200, wobei der Sattelauflieger 200 in einem eingelagerten Zustand dargestellt ist. Die in Figur 4 gezeigte Möglichkeit zeigt eine palettenartige Tragfläche 9, auf der die Räder 201 eines Sattelaufliegers 200 abgestellt sind. Diese ist in Figur 8 im Detail dargestellt. Die Zinken 6 der Handhabungseinheit 2 sind in einer teilweise zurückgefahrenen Position dargestellt, können aber in einer zweiten Position in bzw. unter die Tragfläche 9 bewegt werden und durch eine Bewegung der Handhabungseinheit 2 in vertikaler Richtung die Tragfläche 9 anheben. Durch eine Hubbewegung mit Hilfe der Hubeinheit 4 kann der Sattelauflieger 200 auch im vorderen Bereich angehoben werden und so aus dem Lagerplatz des Hochregallagers entnommen werden.

Eine weitere Alternative zum Anheben der Räder 201 eines Sattelaufliegers 200 ist in Figur 6 gezeigt. Hierbei sind die Zinken 6 des Gabelträgers 5 zumindest bereichsweise mit seitlich ausfahrbaren Bolzen 10 versehen, um die Räder 201 anzuheben. Dabei werden die Bolzen 10 entweder mit definierten Abständen ausgefahren, bis sie entweder voll ausgefahren unter den Rädern 201 sind oder gegen die Innenseiten der Räder 201 gestoßen sind. Nach einer weiteren Alternative können spezielle Bolzen und Halterungen ein Anheben über die Räder 201 gewährleisten.

Abschließend zeigt Figur 5 einen eingelagerten Sattelauflieger 200 bei dem die Stützen 202 auf den kleineren Stellflächen 102 und die Räder 201 auf den größeren Stellflächen 103 abgestellt sind.

Eine derartige Lagerung von Sattelaufliegern 200 in einem Hochregallager 100 unter Verwendung eines RBG 1 ermöglicht somit die Einlagerung einer Vielzahl an Sattelaufliegern 200. Vorteilhaft gegenüber ebenen Parkflächen erweist sich dabei unter anderem eine deutlich verringerte Versiegelung der Bodenfläche. Gleichzeitig reduziert der gewählte strukturelle Aufbau des Hochregallagers 100, bei dem die Stellflächen 102 und 103 keine den ganzen Lagerplatz ausfüllende Vollflächen darstellen, den Materialeinsatz. Ferner weist das Gesamtsystem nur eine geringe Anzahl an Einzelteilen auf und ist dabei vergleichsweise einfach zu fertigen. Die erfindungsgemäßen RBGs 1 ermöglichen zudem die Einlagerung von Sattelaufliegern 200 in ein Hochregallager 100, wobei die erfindungsgemäße Ausgestaltung des RBGs 1 unter anderem die Zugriffszeiten für ein Hochregallager gering hält.

Zur Verbindung eines Sattelaufliegers 200 wird folglich eine Handhabungseinheit 2 mit ihrer vertikal verfahrbaren und seitlich toleranten Sattelkupplung wie eine Art Schlitten unter den Königszapfen des abgestellten Sattelaufliegers gefahren und stellt eine formschlüssige (alternativ auch kraftschlüssige) Verbindung zwischen RBG 1 und Sattelauflieger 200 für das Hantieren her. Die bisherigen Auflagepunkte der Stützen 202 können nun über ein Heben der Sattelkupplung übernommen werden. Die Übernahme der Radauflagepunkte kann je nach Einsatzfall wie oben beschrieben auf verschiedene Arten realisiert werden.

Die kann entweder direkt am Abstellort erfolgen, indem, falls die Räder gebremst sind, aus den Zinken 6 seitlich Bolzen 10 ausfahren, um die Räder 201 anzuheben (Fig. 6), indem ein Keil 8 mit dem Schlitten unter die Räder 201 geschoben wird (Fig. 7), indem eine Minimalpalette 9, welche nur unter den Rädern 201 liegt, mit der Handhabungseinheit 2 gekoppelt wird (Fig. 8), oder indem eine Art Greifer unter die einzelnen Räder 201 geschoben wird, um diese dann von vorne und hinten zu fassen und daran anheben zu können. Falls die Räder ungebremst sind oder der Untergrund entsprechend reibungsarm gestaltet ist, beispielsweise durch Rollen, entsprechendes Material oder dergleichen, kann der ganze Sattelauflieger 200 von der Handhabungseinheit 2 gezogen bzw. geschoben werden. Die Bremswirkung der Räder 201 kann entweder durch Kopplung der Sattelaufliegerversorgung an die Handhabungseinheit 2 oder manuelle Freigabe der Räder gelöst werden. Für die Führung der Achsen des Sattelaufliegers beim Hantieren geben entweder die Unterlage oder seitlich angebrachte Führungen die Richtung vor.

Die Handhabungseinheit 2 des RBG 1 kann dann den so übernommenen Sattelauflieger 200 horizontal und vertikal bis zum gewünschten Ablageplatz verfahren. Dabei wird der Ablageplatz vorzugsweise über eine Kombination aus Gewicht, erwarteten Fahrzeugen, Ankunfts- und Abfahrtszeitpunkt, Dimension, aktueller und erwarteter Auslastung oder Untermengen daraus ermittelt, um möglichst energieeffizient und schnell den geforderten Durchsatz zu realisieren.

Die Handhabungseinheit 2 kann innerhalb des Hochregallagers 100 geführt sein, so dass sich die vertikalen Kräfte gut von dem Hochregallager 100 zu dem RBG 1 überführen lassen. Bei einer bevorzugten Ausführungsform lässt sich noch weiter Material einsparen, wenn auf die vordersten Stützen des Hochregallagers 100 verzichtet wird, da diese nur jeweils während des Ein- und Auslagerungsvorgangs belastet werden. Damit der Verzicht nicht in einer massiveren Ausführung des RBG 1 resultiert, kann dieses dann so ausgeführt werden, dass es auch in Regalfachrichtung verfahren kann, um so die vertikale Lastübernahme momentenarm zu gewährleisten.

Das erfindungsgemäße Regalbediengerät 1 ist in gleicher Weise auch für ganze Sattelzüge nutzbar, wenn für die hinzukommende Sattelzugmaschine eine Lastübernahme wie für die Achsen des Sattelaufliegers vorgesehen wird.

### Bezugszeichen

- 1: Regalbediengerät (RBG)
- 2: Handhabungseinheit
- 3: Rahmenstruktur
- 4: Hubeinheit mit Sattelkupplung
- 5: Gabelträger
- 6: Zinken
- 7: Strebe
- 8: Keil
- 9: Tragfläche
- 10: Bolzen

- 100: Hochregallager
- 101: Lagerplätze
- 102: kleine Stellflächen
- 103: große Stellflächen

- 200: Sattelauflieger
- 201: Räder
- 202: Stützen

## Patentansprüche

1. Regalbediengerät (1) zur Bedienung eines Hochregallagers (100), insbesondere zur Be- und Entladung einer Parkiervorrichtung für Sattelauflieger (200), wobei das Regalbediengerät eine mit einer Rahmenstruktur (3) gekoppelte Handhabungseinheit (2) aufweist, wobei die Rahmenstruktur in wenigstens eine Raumrichtung horizontal verfahrbar ausgestaltet ist, wobei die Handhabungseinheit entlang der Rahmenstruktur vertikal verfahrbar ausgestaltet ist, und wobei die Handhabungseinheit relativ zu der Rahmenstruktur in einer Längsrichtung der Handhabungseinheit von einer ersten Position in wenigstens eine zweite Position verfahrbar ausgestaltet ist, wobei die Handhabungseinheit eine Hubeinheit (4) mit einer, vorzugsweise quer zur Längsrichtung der Handhabungseinheit beweglich gelagerten, Sattelkupplung zur Aufnahme eines Königszapfens eines Sattelaufliegers (200) aufweist, **dadurch gekennzeichnet, dass** die Handhabungseinheit einen Gabelträger (5) aufweist, wobei sich der Gabelträger von der Hubeinheit weg in die Längsrichtung der Handhabungseinheit erstreckt und wenigstens einen Zinken (6) aufweist, und wobei die Hubeinheit dazu eingerichtet ist, eine Hubbewegung in die vertikale Richtung relativ zu dem Gabelträger auszuführen.

2. Regalbediengerät nach Anspruch 1, **dadurch gekennzeichnet, dass** das Regalbediengerät in zwei Raumrichtungen horizontal verfahrbar ausgestaltet ist.

3. Regalbediengerät einem der vorhergehenden Ansprüche, **dadurch gekennzeichnet, dass** die Handhabungseinheit in der ersten Position relativ zu der Rahmenstruktur mittig angeordnet ist, wobei die Rahmenstruktur insbesondere vier sich in vertikaler Richtung erstreckende Streben (7) aufweist.

4. Regalbediengerät nach einem der vorhergehenden Ansprüche, **dadurch gekennzeichnet, dass** die Handhabungseinheit einen mit einem Sattelauflieger (200) koppelbaren Druckluftanschluss zum Lösen von Bremsen des Sattelaufliegers aufweist.

5. Regalbediengerät nach Anspruch 4 für Sattelauflieger (200) mit einem Königszapfen, **dadurch gekennzeichnet, dass** die Sattelkupplung dazu eingerichtet ist, eine formschlüssige oder kraftschlüssige Verbindung mit dem Königszapfen einzugehen.

6. Regalbediengerät nach einem der vorhergehenden Ansprüche, **dadurch gekennzeichnet, dass** die Handhabungseinheit eine Länge von mehr als 10 m und weniger als 16.5 m, vorzugsweise von weniger als 14 m, und/oder eine Breite von mehr als 2 m und weniger als 3 m, vorzugweise von weniger als 2.6 m, aufweist.

7. Regalbediengerät nach einem der vorhergehenden Ansprüche, **dadurch gekennzeichnet, dass** die Zinken zumindest bereichsweise ein Doppel-T-Profil aufweisen.

8. Regalbediengerät nach einem der Ansprüche 1 bis 7, **dadurch gekennzeichnet, dass** die Zinken jeweils wenigstens einen Keil (8) aufweisen, der insbesondere dazu eingerichtet ist unter Räder (201) eines Sattelaufliegers geschoben zu werden.

9. Regalbediengerät nach einem der Ansprüche 1 bis 7, **dadurch gekennzeichnet, dass** die Handhabungseinheit wenigstens eine zusätzliche Vorrichtung, beispielsweise Greifer oder in Querrichtung der Zinken ausfahrbare Bolzen oder eine Tragfläche (9), beispielsweise eine Palette, zum Anheben von Rädern eines Sattelaufliegers aufweist.

10. Hochregallager (100), insbesondere Parkiervorrichtung für Sattelauflieger (200), mit aufweisend Lagerplätze (101), wobei die Lagerplätze zur Einlagerung von Sattelaufliegern eingerichtet sind, **dadurch gekennzeichnet, dass** das Hochregallager wenigstens ein Regalbediengerät (1) nach einem der vorhergehenden Ansprüche aufweist.

11. Hochregallager nach Anspruch 10, **dadurch gekennzeichnet, dass** jeder Lagerplatz wenigstens vier Stellflächen (102, 103) aufweist, wobei die Stellflächen zwei Größen aufweisen, und wobei jeweils zwei Stellflächen gleichgroß sind.

12. Hochregallager nach Anspruch 11, **dadurch gekennzeichnet, dass** die jeweils kleineren Stellflächen (102) zum Absetzen von Stützen (203) eines Sattelaufliegers eingerichtet sind, und wobei die jeweils größeren Stellflächen (103) zum Absetzen von Rädern des Sattelaufliegers eingerichtet sind.

13. Hochregallager nach Anspruch 12, **dadurch gekennzeichnet, dass** der Abstand von Stellflächen übereinander angeordneter Lagerplätze wenigstens 4 m beträgt.

14. Hochregallager nach Anspruch 13, **dadurch gekennzeichnet, dass** das Regalbediengerät (1) dazu eingerichtet ist, dass die Aufnahme beim Einlagern oder die Ablage beim Auslagern der Sattelauflieger (200) direkt vom oder auf den Eisenbahnwaggon erfolgt.

15. Verfahren zur Bedienung eines Hochregallagers nach Anspruch 10 zur Be- und Entladung des Hochregallagers mit Sattelaufliegern, wobei das Verfahren die folgenden Schritte aufweist:
• Einfahren eines Sattelzugs, der eine Sattelzugmaschine und einen Sattelauflieger mit einem Königszapfen aufweist, in das Hochregallager; Absatteln des Sattelaufliegers; Ausfahren der Sattelzugmaschine aus dem Hochregallager; oder Einfahren eines Eisenbahnwaggons beladen mit einem Sattelauflieger mit einem Königszapfen in das Hochregallager;
• Aufsatteln des Sattelaufliegers auf eine Handhabungseinheit des Regalbediengeräts;
• Ermitteln eines Lagerplatzes zur Einlagerung des Sattelaufliegers;
• Anheben des Königszapfens des Sattelaufliegers mit einer Hubeinheit;
• Anheben von Rädern des Sattelaufliegers;
• Bewegen der Handhabungseinheit relativ zum Hochregellager, insbesondere auch durch Relativbewegung des Regalbediengeräts zum Hochregallager;
• Einfahren der Handhabungseinheit in einen Lagerplatz; und
• Absetzen des Sattelaufliegers auf dem Lagerplatz.

16. Verfahren nach Anspruch 15, **dadurch gekennzeichnet, dass** zur Ermittlung eines Lagerplatzes zur Einlagerung des Sattelaufliegers verschiedene Parameter einzeln oder in beliebiger Kombination berücksichtigt werden, wobei die Parameter insbesondere das Gewicht des Sattelaufliegers, die Größe des Sattelaufliegers, die Anzahl zu erwartender Sattelzüge, die geplanten Ankunftszeitpunkte der Sattelzüge, die voraussichtlichen Abfahrtszeitpunkte eingelagerter Sattelauflieger oder die aktuelle und die erwartete Auslastung der Lagerplätze berücksichtigen.

## Claims

1. Storage and retrieval device (1) for operating a high-bay warehouse (100), in particular for loading and unloading a parking device for semi-trailers (200), wherein the storage and retrieval device comprises a handling unit (2) coupled to a frame structure (3), wherein the frame structure is designed to be movable horizontally in at least one spatial direction, wherein the handling unit is designed to be movable vertically along the frame structure, and wherein the handling unit is designed to be movable relative to the frame structure in a longitudinal direction of the handling unit from a first position to at least a second position, wherein the handling unit comprises a lifting unit (4) with a fifth wheel coupling, preferably mounted so as to be movable transversely to the longitudinal direction of the handling unit, for receiving a kingpin of a semi-trailer (200), **characterized in that** the handling unit comprises a fork carrier (5), wherein the fork carrier extends away from the lifting unit in the longitudinal direction of the handling unit and comprises at least one fork (6), and wherein the lifting unit is adapted to perform a lifting movement in the vertical direction relative to the fork carrier.

2. Storage and retrieval device according to claim 1, **characterized in that** the storage and retrieval device is designed to be movable horizontally in two spatial directions.

3. Storage and retrieval device according to one of the preceding claims, **characterized in that** the handling unit is centrally arranged relative to the frame structure in the first position, wherein the frame structure comprises, in particular four, struts (7) extending in the vertical direction.

4. Storage and retrieval device according to one of the preceding claims, **characterized in that** the handling unit comprises a compressed air connection capable of being coupled to a semi-trailer (200) for releasing the brakes of the semi-trailer.

5. Storage and retrieval device according to claim 4 for semi-trailers (200) with a kingpin, **characterized in that** the fifth wheel coupling is adapted to form a positive or frictional connection with the kingpin.

6. Storage and retrieval device according to one of the preceding claims, **characterized in that** the handling unit has a length of more than 10 m and less than 16.5 m, preferably less than 14 m, and/or a width of more than 2 m and less than 3 m, preferably less than 2.6 m.

7. Storage and retrieval device according to one of the preceding claims, **characterized in that** the forks have a double-T profile at least in some areas.

8. Storage and retrieval device according to any one of claims 1 to 7, **characterized in that** the forks each comprise at least one wedge (8) which is specifically designed to be pushed under the wheels (201) of a semi-trailer.

9. Storage and retrieval device according to any one of claims 1 to 7, **characterized in that** the handling unit comprises at least one additional device, for example a gripper or bolts extendable in the transverse direction of the forks, or a support surface (9), for example a pallet, for lifting the wheels of a semi-trailer.

10. High-bay warehouse (100), in particular a parking device for semi-trailers (200), comprising storage bays (101), wherein the storage bays are configured for the storage of semi-trailers, **characterized in that** the high-bay warehouse comprises at least one storage and retrieval device (1) according to one of the preceding claims.

11. High-bay warehouse according to claim 10, **characterized in that** each storage bay comprises at least four storage areas (102, 103), wherein the storage areas are of two sizes, and wherein two storage areas are of the same size in each case.

12. High-bay warehouse according to claim 11, **characterized in that** the smaller storage areas (102) are designed for supporting the legs (203) of a semi-trailer, and the larger storage areas (103) are designed for supporting the wheels of the semi-trailer.

13. High-bay warehouse according to claim 12, **characterized in that** the distance between storage areas arranged one above the other is at least 4 m.

14. High-bay warehouse according to claim 13, **characterized in that** the storage and retrieval device (1) is configured such that the loading during storage or the unloading during retrieval of the semi-trailers (200) takes place directly from or onto the railway wagon.

15. A method for operating a high-bay warehouse according to claim 10 for loading and unloading the high-bay warehouse with semi-trailers, the method comprising the following steps:
• driving an articulated truck, comprising a tractor unit and a semi-trailer with a kingpin, into the high-bay warehouse; uncoupling the semi-trailer; driving the tractor unit out of the high-bay warehouse; or driving a railway wagon loaded with a semi-trailer with a kingpin into the high-bay warehouse;
• coupling the semi-trailer to a handling unit of the storage and retrieval device;
• identifying a storage bay for the semi-trailer;
• lifting the kingpin of the semi-trailer using a lifting unit;
• lifting the wheels of the semi-trailer;
• moving the handling unit relative to the high-bay warehouse, in particular also by relative movement of the storage and retrieval device relative to the high-bay warehouse;
• moving the handling unit into a storage bay; and
• lowering the semi-trailer onto the storage bay.

16. The method according to claim 15, **characterized in that,** for the purpose of determining a storage bay for storing the semi-trailer, various parameters are taken into account individually or in any combination, wherein the parameters include, in particular, the weight of the semi-trailer, the size of the semi-trailer, the number of expected articulated trucks, the planned arrival times of the articulated trucks, the expected departure times of stored semi-trailers, or the current and expected utilization of the storage bays.

## Revendications

1. Transstockeur (1) pour l'utilisation d'un entrepôt à rayonnages hauts (100), en particulier pour le chargement et le déchargement d'un dispositif de stationnement pour semi-remorques (200), sachant que le transstockeur comporte une unité de manutention (2) couplée à une structure à cadre (3), sachant que la structure à cadre est configurée pouvant être déplacée horizontalement dans au moins une direction spatiale, sachant que l'unité de manutention est configurée pouvant être déplacée verticalement le long de la structure à cadre et sachant que l'unité de manutention est configurée pouvant se déplacer d'une première position dans au moins une deuxième position par rapport à la structure à cadre dans une direction longitudinale de l'unité de manutention, sachant que l'unité de manutention comporte une unité de levage (4) avec une sellette d'attelage logée mobile de préférence transversalement à la direction longitudinale de l'unité de manutention pour la réception d'un pivot d'attelage d'une semi-remorque (200), **caractérisé en ce que** l'unité de manutention comporte un porte-fourche (5), sachant que le porte-fourche s'étend s'éloignant de l'unité de levage dans la direction longitudinale de l'unité de manutention et comporte au moins un bras de fourche (6), et sachant que l'unité de levage est agencée pour exécuter un mouvement de levage dans la direction verticale par rapport au porte-fourche.

2. Transstockeur selon la revendication 1, **caractérisé en ce que** le transstockeur est configuré pouvant être déplacé horizontalement dans au moins deux directions spatiales.

3. Transstockeur selon l'une quelconque des revendications précédentes, **caractérisé en ce que** l'unité de manutention est disposé au centre dans la première position par rapport à la structure à cadre, sachant que la structure à cadre comporte en particulier quatre montants (7) s'étendant en direction verticale.

4. Transstockeur selon l'une quelconque des revendications précédentes, **caractérisé en ce que** l'unité de manutention comporte un raccord pneumatique couplable à une semi-remorque (200) pour relâcher les freins de la semi-remorque.

5. Transstockeur selon la revendication 4 pour semi-remorques (200) avec un pivot d'attelage, **caractérisé en ce que** la sellette d'attelage est agencée pour adopter une liaison par conformité de forme ou de force avec le pivot d'attelage.

6. Transstockeur selon l'une quelconque des revendications précédentes, **caractérisé en ce que** l'unité de manutention comporte une longueur de plus de 10 m et de moins de 16,5 m, de préférence de moins de 14 m, et/ou une largeur de plus de 2 m et de moins de 3 m, de préférence de moins de 2,6 m.

7. Transstockeur selon l'une quelconque des revendications précédentes, **caractérisé en ce que** les bras de fourche comportent au moins par endroits un profil en T double.

8. Transstockeur selon l'une quelconque des revendications 1 à 7, **caractérisé en ce que** les bras de fourche comportent respectivement au moins une cale en coin (8), qui est en particulier agencée pour être glissé sous les roues (201) d'une semi-remorque.

9. Transstockeur selon l'une quelconque des revendications 1 à 7, **caractérisé en ce que** l'unité de manutention comporte au moins un dispositif supplémentaire, par exemple un préhenseur ou des axes extensibles en direction transversale des bras de fourche ou une surface portante (9), par exemple une palette, pour soulever des roues d'une semi-remorque.

10. Entrepôt à rayonnages hauts (100), en particulier dispositif de stationnement pour semi-remorques (200), comportant des emplacements d'entreposage (101), sachant que les emplacements d'entreposage sont agencés pour l'entreposage de semi-remorques, **caractérisé en ce que** l'entrepôt à rayonnages hauts comporte au moins un transstockeur (1) selon l'une quelconque des revendications précédentes.

11. Entrepôt à rayonnages hauts selon la revendication 10, **caractérisé en ce que** chaque emplacement d'entreposage comporte au moins quatre compartiments de positionnement (102, 103), sachant que les surfaces de positionnement comportent deux tailles et sachant que respectivement deux surfaces de positionnement sont de même taille.

12. Entrepôt à rayonnages hauts selon la revendication 11, **caractérisé en ce que** les surfaces de positionnement respectivement plus petites (102) sont agencées pour la dépose des supports (203) d'une semi-remorque et sachant que les surfaces respectivement plus grandes (103) sont agencées pour la dépose des roues de la semi-remorque.

13. Entrepôt à rayonnages hauts selon la revendication 12, **caractérisé en ce que** la distance entre les surfaces de positionnement des emplacements d'entreposage disposés les uns sur les autres est au moins de 4 m.

14. Entrepôt à rayonnages hauts selon la revendication 13, **caractérisé en ce que** le transstockeur (1) est agencé pour que la réception lors de l'entreposage ou la dépose lors du déstockage des semi-remorques (200) aient lieu directement du ou sur le wagon de chemin de fer.

15. Procédé d'utilisation d'un entrepôt à rayonnages hauts selon la revendication 10 pour le chargement et le déchargement de l'entrepôt à rayonnages hauts avec des semi-remorques, sachant que le procédé comporte les étapes suivantes :
• entrée d'un ensemble tracteur semi-remorque, qui comporte un tracteur pour semi-remorque et une semi-remorque avec un pivot d'attelage, dans l'entrepôt à rayonnages hauts, dételage de la semi-remorque, sortie du tracteur pour semi-remorque de l'entrepôt à rayonnages hauts ou entrée d'un wagon de chemin de fer chargé avec une semi-remorque avec un pivot d'attelage dans l'entrepôt à rayonnages hauts,
• attelage de la semi-remorque sur une unité de manutention du transstockeur,
• détermination d'un emplacement d'entreposage pour l'entreposage de la semi-remorque,
• soulèvement du pivot d'attelage de la semi-remorque avec une unité de levage,
• soulèvement des roues de la semi-remorque,
• déplacement de l'unité de manutention par rapport à l'entrepôt à rayonnages hauts, en particulier également par mouvement relatif du transstockeur par rapport à l'entrepôt à rayonnages hauts,
• entrée de l'unité de manutention dans un emplacement d'entreposage, et
• dépose de la semi-remorque sur l'emplacement d'entreposage.

16. Procédé selon la revendication 15, **caractérisé en ce que** pour déterminer un emplacement d'entreposage pour entreposer la semi-remorque, différents paramètres sont pris en considération de façon individuelle ou dans une combinaison quelconque sachant que les paramètres tiennent compte en particulier du poids de la semi-remorque, de la taille de la semi-remorque, du nombre d'ensembles tracteurs semi-remorques à attendre, des moments d'arrivée planifiés des ensembles tracteurs semi-remorques, des moments de départ estimés des semi-remorques entreposées ou de l'occupation actuelle et attendue des emplacements d'entreposage.
